# EUROPÄISCHE PATENTANMELDUNG

(11) **EP 3 101 499 A1**
(43) Veröffentlichungstag der Anmeldung: **07.12.2016**
(21) Anmeldenummer: 16001252.2
(22) Anmeldetag: 03.06.2016
(51) Int. Cl.: G05B 19/416, B23Q 15/20

(54) **VORRICHTUNG ZUR SPANABHEBENDEN BEARBEITUNG VON WERKSTÜCKEN**

(30) Priorität: 03.06.2015 DE 102015006876
(71) Anmelder: Optimum Maschinen Germany GmbH, 91603 Hallstadt (DE)
(72) Erfinder: Trepesch, Martin, 97437 Hassfurt (DE); Stürmer, Kilian, 96103 Hallstadt (DE)
(74) Vertreter: Witzany, Manfred

(57) **Zusammenfassung**

Eine Vorrichtung (1) dient zur spanabhebenden Bearbeitung von Werkstücken. Die Vorrichtung (1) weist dabei ein Werkzeug (2) auf, welches von einem Elektromotor (4) zur Drehung angetrieben ist. Dieser Elektromotor (4) steht mit einer Steuerung (5) in Wirkverbindung, die ein Eingabegerät aufweist. Über dieses Eingabegerät (6) können Benutzereingaben entgegengenommen werden. Über das Eingabegerät (6) kann der Durchmesser bzw. Radius des Werkzeugs, das Material des Werkstücks -z.B. Eisen- oder Kupferlegierung-, die Bearbeitungsart -z.B. Bohren oder Fräsen-, und die Anzahl der Zähne des Werkzeugs eingegeben werden. Aus diesen Eingaben wird die Drehzahl des Elektromotors (4), die Schnittgeschwindigkeit bzw. die Vorschubgeschwindigkeit berechnet und mittels der Steuerung (5) der Elektromotor (4) entsprechend angesteuert.

## Beschreibung

Die Erfindung betrifft eine Vorrichtung zur spanabhebenden Bearbeitung von Werkstücken, wobei die Vorrichtung mindestens ein Werkzeug aufweist, welches von mindestens einem Elektromotor zur Drehung angetrieben ist. Dieser mindestens eine Elektromotor steht mit mindestens einer Steuerung in Wirkverbindung, die eine Drehzahl des mindestens einen Elektromotors stufenlos verändern kann. Das mindestens eine Steuergerät weist mindestens ein Eingabegerät auf, welches Benutzereingaben zur Steuerung des mindestens einen Elektromotors entgegennehmen kann.

Aus der DD 251288 A1 ist eine Einrichtung zur Drehzahleinstellung für ein zahnärztliches Behandlungsgerät bekannt. Diese weist ein Abtastsystem für das Bearbeitungswerkzeug auf, welches eine keilförmige Öffnung besitzt. Je größer der Werkzeugdurchmesser ist, umso weniger tief kann dieses Werkzeug in die keilförmige Öffnung eintauchen. Die Eintauchtiefe wird dabei mittels eines Taststiftes erfasst und zur Drehzahleinstellung des Werkzeugs genutzt. Dieses Verfahren ist technisch sehr aufwendig und damit teuer, was bei zahnärztlichen Behandlungsgeräten wohl nur eine untergeordnete Rolle spielen wird. Eine Übertragung dieser Technik auf nicht medizinische Anwendungen verbietet sich jedoch aus Kostengründen.

Aus der DE 196 29 623 A1 ist eine Werkzeugmaschine bekannt, bei der ein Elektromotor mit einem Stufengetriebe mit einem Werkzeug verbunden ist. Um dem Benutzer dieser Werkzeugmaschine die Wahl der Drehzahl zu ersparen, wurden dabei die Werkzeuge durch Anbringung einer entsprechenden Markierung indexiert. Diese Markierung wird von der Werkzeugmaschine ausgewertet und hierauf die passende Drehzahl ausgewählt. Damit können zwar technisch spezialisierte Benutzer die richtige Werkzeugdrehzahl nutzen, allerdings funktioniert diese bekannte Werkzeugmaschine nur mit indexierten Werkzeugen, die relativ teuer in der Anschaffung sein werden. Dieser Umstand ist insbesondere im Hobbybereich nicht tragbar. Im professionellen Bereich ist dagegen der damit verbundene Nutzen relativ gering. Außerdem kann der Benutzer die Drehzahl nicht bewusst abweichend von der vorgegebenen Drehzahl wählen, wenn dies beispielsweise aus Gründen des zu bearbeitenden Materials erforderlich sein sollte.

Aus der DE 10 2013 222 550 A1 ist eine gattungsgemäße Handwerkzeugmaschine bekannt, die insbesondere als Akku-Bohrschrauber ausgebildet ist. Diese Handwerkzeugmaschine weist einen Elektromotor auf, der über ein Planetengetriebe mit einem Werkzeug verbunden ist. Der Benutzer kann dabei durch verschieden tiefes Eindrücken eines Knopfes die Drehzahl des Motors und damit des Werkzeugs stufenlos verändern. Diese Vorrichtung hat sich in der Praxis vielfach bewährt und bildet den Ausgangspunkt der vorliegenden Erfindung.

Der Erfindung liegt die Aufgabe zugrunde, eine Vorrichtung zur spanabhebenden Bearbeitung der eingangs genannten Art zu schaffen, welche sowohl dem technisch wenig versierten Hobbybastler als auch dem professionellen Handwerker eine ergonomische Drehzahleinstellung ermöglicht, wobei die Anschaffungskosten für die Vorrichtung selbst sowie der damit eingesetzten Werkzeuge gering bleiben sollen.

Diese Aufgabe wird erfindungsgemäß mit den folgenden Merkmalen gelöst.

Eine erfindungsgemäße Vorrichtung dient zur spanabhebenden Bearbeitung von Werkstücken, wobei insbesondere an Bohren, Gewindeschneiden und Fräsen gedacht ist. Die Vorrichtung weist mindestens ein Werkzeug auf, welches von mindestens einem Elektromotor zur Drehung angetrieben ist. Dabei ist es in der Regel wichtig, die für das eingesetzte Werkzeug und das zu bearbeitende Material jeweils optimale Drehzahl des Werkzeugs zu finden und einzustellen. Hierzu steht der mindestens eine Elektromotor mit mindestens einer Steuerung in Wirkverbindung, die dessen Drehzahl stufenlos verändern kann. Im Bereich niedriger Motorleistungen wird hierzu die Motorspannung beispielsweise über eine Phasenanschnittsteuerung variiert. Im Bereich hoher Leistungen kommen fast ausschließlich Asynchronmotoren zum Einsatz, deren Drehzahl über Frequenzumrichter in einem weiten Drehzahlbereich eingestellt werden kann. In jedem Fall benötigt die Steuerung einen Vorgabewert für die einzustellende Drehzahl. Zu diesem Zweck weist die mindestens eine Steuerung mindestens ein Eingabegerät auf, welches Benutzereingaben zur Steuerung des mindestens einen Elektromotors entgegennehmen kann. Unter "Benutzereingaben" sind dabei nur solche Eingaben zu verstehen, die der Benutzer frei wählen kann. Ausgeschlossen sind hierbei insbesondere messtechnische Erfassungen jeglicher Art am Werkzeug selbst. Das mindestens eine Eingabegerät kann zumindest einen ersten Wert entgegennehmen, der einen Werkzeugdurchmesser und/oder -radius des mindestens einen Werkzeugs repräsentiert. Die mindestens eine Steuerung berechnet hieraus die Drehzahl des mindestens einen Elektromotors, die dem eingegebenen Werkzeugdurchmesser bzw. -radius angemessen ist und steuert den mindestens einen Elektromotor entsprechend der berechneten Drehzahl an. Damit muss der Benutzer keine Drehzahlwerte in Abhängigkeit des Werkzeugdurchmessers wissen, er gibt vielmehr einfach den entsprechenden Durchmesser bzw. Radius des einzusetzenden Werkzeugs ein. Die Wahl des Werkzeugdurchmessers oder -radius ist für den Benutzer ohnehin von hoher Bedeutung, so dass diese Auswahl bewusst erfolgt. Unter diesen Umständen ist die Eingabe eines falschen Werkzeugdurchmessers oder -radius auch für Hobbybastler zuverlässig auszuschließen. Für den professionellen Handwerker bietet die beschriebene Drehzahlvorauswahl den Vorteil, dass die richtige Drehzahl schneller gefunden werden kann, was Rüstzeiten beim Werkzeugwechsel erheblich verkürzt. Die Berechnung der voraus zu wählenden Drehzahl aus dem eingegebenen, mindestens einen ersten Wert erfordert keinerlei messtechnische oder mechanische Ergänzungen der Vorrichtung. Es reicht vielmehr völlig aus, die Vorrichtung mit einer Rechenschaltung auszurüsten, die vorzugsweise als Mikroprozessor, insbesondere Mikrocontroller ausgebildet ist. Da derartige Mikrocontroller oftmals ohnehin bereits in die Motorsteuerung und/oder in eine Displaysteuerung integriert sind, kann die bereits vorhandene Rechenleistung dazu genutzt werden, die oben beschriebenen Entscheidungen und Berechnungen auszuführen. Damit beschränkt sich der Mehraufwand zur Realisierung dieser Lösung auf eine zusätzliche Software, die außer Entwicklungskosten keine weiteren Produktionskosten verursacht. Damit lässt sich der Erfindungsgegenstand besonders kostengünstig realisieren, was die Akzeptanz sowohl im Hobbybereich als auch im professionellen Handwerkerbereich entsprechend erhöht. Im Hobbybereich wird die Kaufentscheidung fast ausschließlich nach dem Preis gefällt. Im professionellen Bereich werden Zusatzkosten für die Erleichterung der Bedienung von hoch geschultem Personal nur schwer akzeptiert, da hier oftmals die Einsicht für die daraus erzielbaren Vorteile fehlt. Insofern ist es wichtig, dass diese ergonomische Verbesserung praktisch ohne Mehrkosten realisierbar ist. Durch die richtige Drehzahlvorwahl ergibt sich eine hohe Bearbeitungsgeschwindigkeit bei gleichzeitig geringem Werkzeugverschleiß. Da das umständliche Ausrechnen der erforderlichen Drehzahl im Kopf entfällt, ergeben sich auch verringerte Rüstzeiten, was sich ebenfalls positiv auf die gesamte Bearbeitungszeit auswirkt. Insgesamt werden auf diese Weise sowohl von Hobbybastlern wie auch von Profis bessere Arbeitsergebnisse erzielt, da die gesamte Bearbeitung optimiert ist. Die bedienende Person wird von Drehzahlberechnungen entlastet, so dass sie sich voll auf die eigentliche Arbeit konzentrieren kann.

Neben dem Werkzeugdurchmesser spielt auch das zu bearbeitende Material oftmals eine entscheidende Rolle zur Bestimmung der erforderlichen Werkzeugdrehzahl. Aus diesem Grund ist es vorteilhaft, wenn das mindestens eine Eingabegerät einen das Material des zu bearbeitenden Werkstücks repräsentierenden zweiten Wert entgegennehmen kann. Dieser zweite Wert wird mit dem ersten Wert mathematisch verknüpft, um daraus in Abhängigkeit des Werkzeugdurchmessers oder -radius und des zu bearbeitenden Materials die jeweils optimale Drehzahl zu ermitteln.

Außerdem spielt die Art der Bearbeitung für die Drehzahlwahl eine Rolle. Insbesondere ist zu unterscheiden, ob das Werkstück einerseits gebohrt oder gefräst oder andererseits ein Gewinde geschnitten wird. Beim Gewindeschneiden sind in der Regel wesentlich geringere Drehzahlen zulässig, da die Gewindeschneidwerkzeuge aufgrund ihres feinzahnigen Aufbaus nur sehr geringe Drehmomente übertragen und Späne leicht verklemmen können. Zu diesem Zweck kann das mindestens eine Eingabegerät einen dritten Wert entgegennehmen, welcher repräsentiert, ob ein Gewinde geschnitten werden soll oder nicht. Auch dies wird dann bei der Einstellung der Drehzahl des mindestens einen Werkzeugs berücksichtigt. Zur einfachen numerischen Realisierung der erforderlichen Berechnungsfunktionen ist es vorteilhaft, wenn die mindestens eine Steuerung mindestens eine Tabelle enthält, welche die einzustellenden Drehzahlen in Abhängigkeit der eingegebenen Werte repräsentiert. Auf diese Weise wird der erforderliche Rechenaufwand auf ein Minimum reduziert. Dies ist insbesondere beim Einsatz von Mikrocontrollern mit sehr geringer Rechenleistung günstig.

Oftmals kommt es vor, dass die in der oben beschriebenen Weise ermittelte Drehzahl zwar ausreichend, nicht jedoch optimal ist. Insbesondere der Profihandwerker wünscht eine Einflussnahme auf die Werkzeugdrehzahl, damit er diese optimal einstellen kann. Um auch unter diesen Umständen nicht auf die Vorzüge der in oben beschriebener Weise voreingestellten Drehzahl verzichten zu müssen, ist es vorteilhaft, wenn das mindestens eine Eingabegerät mindestens einen vierten Wert entgegennehmen kann, der die voreingestellte Drehzahl verändert. Auf diese Weise ist eine einfache Anpassung an besondere Gegebenheiten möglich.

Aufwendigere Vorrichtungen zur spanabhebenden Bearbeitung, insbesondere Fräsmaschinen, weisen oftmals mindestens einen Vorschubantrieb für das mindestens eine Werkzeug auf. In diesem Fall muss außerdem die Vorschubgeschwindigkeit korrekt eingestellt werden, um einerseits eine schnelle Bearbeitung zu realisieren und andererseits eine Beschädigung des mindestens einen Werkzeugs zu vermeiden. Hierzu ist es vorteilhaft, wenn das mindestens eine Eingabegerät mindestens einen vierten Wert erfasst, der die Zähnezahl des mindestens einen Werkzeugs repräsentiert. In diesem Fall kann aus der Zähnezahl und der Drehzahl des mindestens einen Elektromotors die angemessene Vorschubgeschwindigkeit berechnet werden, wobei ggf. noch die bekannte Materialart berücksichtigt wird. Auf diese Weise ergeben sich besonders kurze Rüstzeiten, da sämtliche bearbeitungsrelevanten Parameter voreingestellt sind. Selbstverständlich ist daran gedacht, die Vorschubgeschwindigkeit nachträglich anpassen zu können, um besonderen Bedürfnissen Rechnung zu tragen.

Für die Beeinflussung der vorgegebenen Drehzahl durch den mindestens einen fünften Wert ist es günstig, wenn dieser mindestens eine vierte Wert mit der voreingestellten Drehzahl addiert, subtrahiert, multipliziert und/oder dividiert wird. Beim Addieren und Subtrahieren stehen dem Benutzer praktisch alle Möglichkeiten offen. Beim Multiplizieren und Dividieren wird dagegen die Drehzahl prozentual bezüglich der voreingestellten Drehzahl verändert. Dies hat den Vorteil, dass die Drehzahländerung im unteren Drehzahlbereich feinfühliger und im oberen Drehzahlbereich grober wird, was die Einstellbarkeit erheblich erleichtert.

Um zu verhindern, dass durch diese zusätzliche Einstellmöglichkeit die ausgewählte Drehzahl unerlaubt hoch ist, ist es vorteilhaft, wenn die Veränderung der Drehzahl durch den mindestens einen vierten Wert nur bis zu einer vorgegebenen Maximaldrehzahl möglich ist. Auf diese Weise werden nicht nur Werkzeug und Werkstück geschont, auf diese Weise ergibt sich auch eine erhöhte Sicherheit für den Benutzer, da Werkzeugbrüche durch versehentlich zu hoch eingestellte Drehzahlen zumindest sehr unwahrscheinlich werden.

Um die erforderlichen Werte möglichst einfach und rationell in das mindestens eine Eingabegerät eingeben zu können, ist es vorteilhaft, wenn dieses mindestens eine Menüführung aufweist. Dabei sind in einzelnen Menüpunkten mögliche Eingabewerte vorgeschlagen, aus denen der Benutzer einfach den geeigneten Wert auswählen kann. Beispielsweise schlägt das Menü dem Benutzer unterschiedliche Werkzeugdurchmesser vor, von denen er den am nächsten liegenden Durchmesser auswählt.

Ebenso kann das Menü dem Benutzer verschiedene Werkstoffe und Bearbeitungsverfahren zur Auswahl anbieten.

Zur einfachen Auswahl der Menüpunkte ist es schließlich vorteilhaft, wenn das mindestens eine Eingabegerät mindestens einen Drehknopf und/oder Taste aufweist, die eine Navigation innerhalb der Menüführung und eine Auswahl der vorgeschlagenen Werte ermöglichen. Auf diese Weise ergibt sich eine übersichtliche Eingabemöglichkeit der Werte bei gleichzeitig geringem Aufwand. Auf diese Weise lässt sich ein hoher ergonomischer Standard bei gleichzeitig geringem Herstellungspreis erzielen.

Der Erfindungsgegenstand wird beispielhaft anhand der Zeichnung erläutert, ohne den Schutzumfang zu beschränken.

Es zeigt:
- Figur 1: eine räumliche Darstellung einer Vorrichtung am Beispiel einer Bohrmaschine,
- Figur 2: ein Beispiel für eine Menüführung und
- Figur 3: eine Tabelle der voreingestellten Drehzahlen.

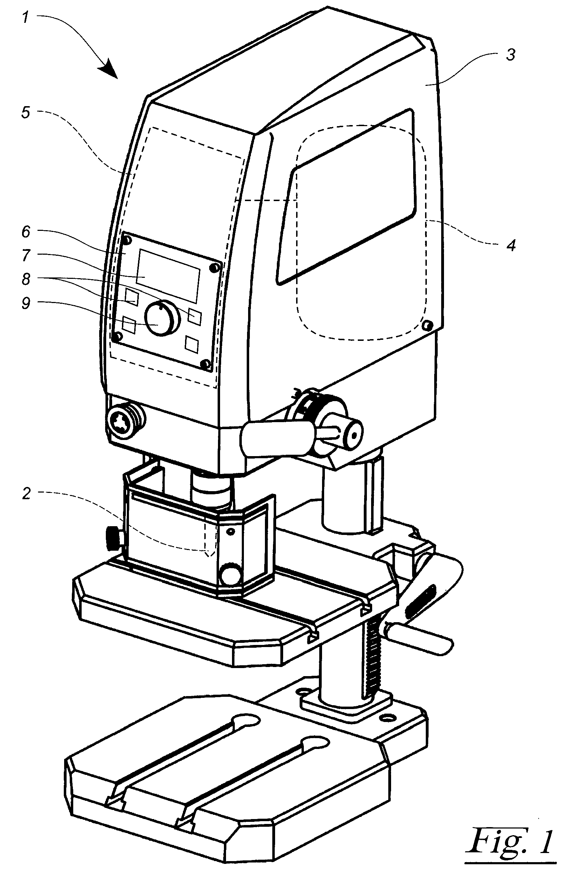

Die Figur 1 zeigt eine räumliche Darstellung einer Vorrichtung 1, insbesondere einer Ständerbohrmaschine. Die Vorrichtung 1 dient zur Bearbeitung eines nicht dargestellten Werkstücks und weist ein Werkzeug 2 auf, welches lediglich beispielhaft als Bohrer dargestellt ist. Die Vorrichtung 1 weist außerdem in einem Gehäuse 3 einen Elektromotor 4 auf, der als Gleichstrommotor, Wechselstrommotor oder Asynchronmotor ausgebildet sein kann. Diese Aufzählung ist jedoch nicht abschließend zu verstehen. Der Elektromotor 4 steht mit einer Steuerung 5 in Wirkverbindung, die den Elektromotor 4 insbesondere in Bezug auf dessen Drehzahl beeinflusst.

Die Steuerung 5 weist ein Eingabegerät 6 auf, um die Steuerung 5 mit Werten zu versorgen. Hierzu weist das Eingabegerät 6 eine Anzeigeeinrichtung 7 auf, welche vorzugsweise als LCD-, Plasma-Display oder LED-Display ausgebildet ist. Auch diese Aufzählung ist nicht abschließend zu verstehen. Das Eingabegerät 6 weist mehrere Tasten 8 auf, um fundamentale Funktionen wie beispielsweise ein- und ausschalten der Vorrichtung 1 zu realisieren. Außerdem weist das Eingabegerät 6 einen Drehknopf 9 auf, der gleichzeitig eine Tastenfunktion aufweist. Durch Drehen des Drehknopfs 9 kann man innerhalb einer Menüsteuerung des Eingabegeräts 6 navigieren und den ausgewählten Menüpunkt durch Drücken des Drehknopfs 9 auswählen.

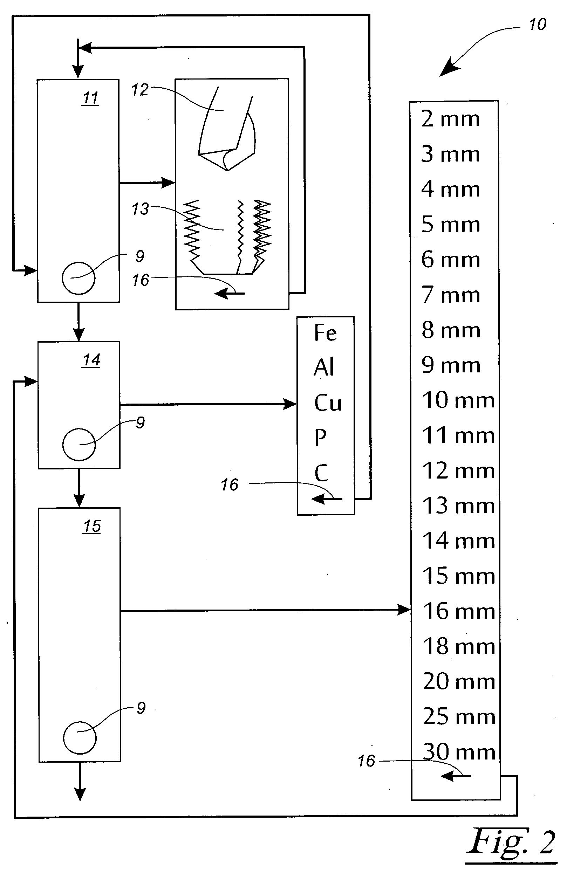

Die Menüführung 10 wird anhand von Figur 2 näher erläutert. Die Menüführung 10 beginnt mit einer Listenabfrage 11. In dieser kann der Benutzer zwischen den Menüpunkten Bohren 12 und Gewindeschneiden 13 entscheiden. Diese beiden Auswahlpunkte werden in der Listenabfrage 11 vorgegeben. Der Benutzer kann durch Drehen des Drehknopfs 9 zwischen diesen beiden Menüpunkten wählen und die Auswahl durch Drücken des Drehknopfs 9 bestätigen. Dabei ist die zuletzt gewählte Auswahl voreingestellt. Bei gleicher Auswahl muss der Benutzer daher nur den Drehknopf 9 drücken. Dadurch wird die Listenabfrage 11 geschlossen und eine Listenabfrage 14 geöffnet.

In der Listenabfrage 14 kann der Benutzer das Material des zu bearbeitenden Werkstücks einstellen. Er hat die Auswahl zwischen Fe für Eisenlegierungen, Al für Aluminium, Cu für kupferhaltige Legierungen wie Messing, Neusilber, Bronze usw., P für Polymere und C für Holz- und Papierwerkstoffe. Auch diese Auswahlpunkte werden durch Drehen des Drehknopfs 9 ausgewählt und durch Drücken desselben bestätigt. Dabei ist die zuletzt gewählte Auswahl voreingestellt. Bei gleicher Auswahl muss der Benutzer daher nur den Drehknopf 9 drücken. Nach Bestätigung der Materialauswahl gelangt der Benutzer in eine weitere Listenabfrage 15.

In der Listenabfrage 15 kann der Benutzer zwischen verschiedenen Werkzeugdurchmessern von 2 mm bis 30 mm wählen. Auch diese Auswahl erfolgt durch Drehen des Drehknopfs 9. Die Auswahl wird dann durch Drücken des Drehknopfs 9 bestätigt. Dabei ist die zuletzt gewählte Auswahl voreingestellt. Bei gleicher Auswahl muss der Benutzer daher nur den Drehknopf 9 drücken. Nach Bestätigung der Durchmesserabfrage ermittelt die Steuerung 5 die sich aus den eingegebenen Werten ergebende Drehzahl und steuert den Elektromotor 4 entsprechend an.

Um Fehleingaben korrigieren zu können, enthalten die Listenabfragen 11, 14 und 15 jeweils einen Zurückpunkt 16, der jeweils zur übergeordneten Listenabfrage 11, 14 führt.

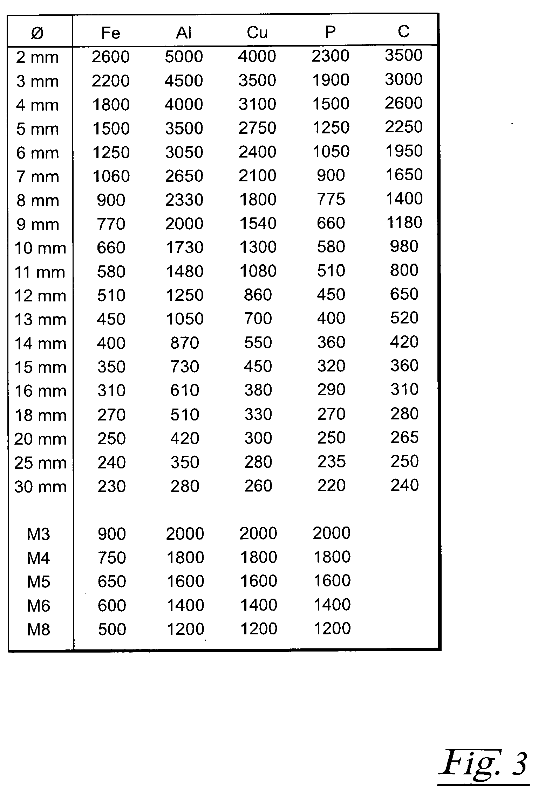

Die Figur 3 zeigt eine Tabelle mit Drehzahlen für unterschiedliche Materialien, Werkzeugdurchmesser und -arten. Dabei steht Fe für Eisenlegierungen, Al für Aluminium, Cu für Kupferlegierungen, P für Polymere und C für Holz- und Papierwerkstoffe. Die angegebenen Durchmesser in Millimeter sind Bohrerdurchmesser, die in gleicher Weise auch für Fräser anwendbar sind. Die Durchmesser M3 bis M8 sind metrische Gewinde, die mittels Gewindeschneider erzeugt werden. Diese benötigen entsprechend kleinere Drehzahlen als Bohrer.

Die Tabelle gemäß Figur 3 ist in der Steuerung 5 der Vorrichtung 1 hinterlegt, wobei entsprechend den eingegebenen Auswahlkriterien die entsprechende Drehzahl eingestellt wird.

Die voreingestellte Drehzahl kann durch Drehen des Drehknopfs 9 noch nach oben bzw. unten verändert werden, wobei hinterlegte Maximalwerte nicht überschreitbar sind.

### Bezugszeichenliste

- 1: Vorrichtung
- 2: Werkzeug
- 3: Gehäuse
- 4: Elektromotor
- 5: Steuerung
- 6: Eingabegerät
- 7: Anzeigeeinrichtung
- 8: Taste
- 9: Drehknopf
- 10: Menüführung
- 11: Listenabfrage
- 12: Bohren
- 13: Gewindeschneiden
- 14: Listenabfrage
- 15: Listenabfrage
- 16: Zurückpunkt

## Patentansprüche

1. Vorrichtung zur spanabhebenden Bearbeitung von Werkstücken, wobei die Vorrichtung (1) mindestens ein Werkzeug (2) aufweist, welches von mindestens einem Elektromotor (4) zur Drehung angetrieben ist, welcher mit mindestens einer Steuerung (5) in Wirkverbindung steht, die eine Drehzahl des mindestens einen Elektromotors (4) stufenlos verändern kann, wobei die mindestens eine Steuerung (5) mindestens ein Eingabegerät (6) aufweist, welches Benutzereingaben zur Steuerung des mindestens einen Elektromotors (4) entgegennehmen kann, **dadurch gekennzeichnet, dass** das mindestens eine Eingabegerät (4) zumindest die Eingabe eines den Werkzeugdurchmesser und/oder -radius repräsentierenden Wertes ermöglicht, wobei die mindestens eine Steuerung (5) in Abhängigkeit von dem mindestens einen ersten Wert die Drehzahl des mindestens einen Elektromotors (4) berechnet und den mindestens einen Elektromotor (4) entsprechend der berechneten Drehzahl ansteuert.

2. Vorrichtung nach Anspruch 1, **dadurch gekennzeichnet, dass** das mindestens eine Eingabegerät (6) mindestens einen ein Material des zu bearbeitenden Werkstücks repräsentierenden zweiten Wert entgegennehmen kann, wobei die mindestens eine Steuerung (5) in Abhängigkeit von diesem mindestens einen zweiten Wert die Drehzahl des mindestens einen Elektromotors (4) berechnet und den mindestens einen Elektromotor (4) entsprechend der berechneten Drehzahl ansteuert.

3. Vorrichtung nach Anspruch 1 oder 2, **dadurch gekennzeichnet, dass** das mindestens eine Eingabegerät (6) mindestens einen dritten Wert entgegennehmen kann, welcher die Bearbeitungsart repräsentiert, ob gebohrt oder ein Gewinde geschnitten werden soll, wobei die mindestens eine Steuerung (5) in Abhängigkeit vom mindestens einen dritten Wert die Drehzahl des mindestens einen Elektromotors (4) berechnet und den mindestens einen Elektromotor (4) entsprechend der berechneten Drehzahl ansteuert.

4. Vorrichtung nach mindestens einen der Ansprüche 1 bis 3, **dadurch gekennzeichnet, dass** die mindestens eine Steuerung mindestens eine Tabelle enthält, welche die einzustellende Drehzahl in Abhängigkeit der eingegebenen Werte repräsentiert.

5. Vorrichtung nach mindestens einem der Ansprüche 1 bis 4, **dadurch gekennzeichnet, dass** das mindestens eine Eingabegerät (6) mindestens einen vierten Wert erfasst, der eine Zähnezahl des mindestens einen Werkzeugs (2) repräsentiert, wobei aus der Drehzahl des mindestens einen Elektromotors (4) und dem mindestens einen vierten Wert eine Vorschubgeschwindigkeit des mindestens einen Werkzeugs (2) berechnet und der mindestens einen Steuerung (5) übergeben wird, die einen Vorschubantrieb ansteuert.

6. Vorrichtung nach mindestens einem der Ansprüche 1 bis 5, **dadurch gekennzeichnet, dass** das mindestens eine Eingabegerät (6) mindestens einen fünften Wert entgegennehmen kann, der die voreingestellte Drehzahl verändert.

7. Vorrichtung nach Anspruch 6, **dadurch gekennzeichnet, dass** die voreingestellte Drehzahl mit dem mindestens einen vierten Wert addiert, subtrahiert, multipliziert und/oder dividiert wird.

8. Vorrichtung nach mindestens einem der Ansprüche 1 bis 7, **dadurch gekennzeichnet, dass** die Veränderung der Drehzahl durch den mindestens einen vierten Wert nur bis zu einer vorgegebenen Maximaldrehzahl möglich ist.

9. Vorrichtung nach mindestens einem der Ansprüche 1 bis 8, **dadurch gekennzeichnet, dass** das mindestens eine Eingabegerät (6) den mindestens einen ersten, zweiten und/oder dritten Wert mittels mindestens einer Menüführung (10) erfasst, bei der mögliche Eingabewerte vorgeschlagen und auswählbar sind.

10. Vorrichtung nach Anspruch 9, **dadurch gekennzeichnet, dass** das mindestens eine Eingabegerät (6) mindestens einen Drehknopf (9) und/oder mindestens eine Taste (8) aufweist, welche ein Navigieren innerhalb der Menüführung (10) und eine Auswahl der vorgeschlagenen Werte ermöglicht.
